# FASCICULE DE BREVET EUROPEEN

(11) **EP 0 596 791 B1**
(45) Date de publication et mention de la délivrance du brevet: **12.03.1997**
(21) Numéro de dépôt: 93402686.5
(22) Date de dépôt: 02.11.1993
(51) Int. Cl.: H01F 6/06, H02H 9/02

(54) **Bobinage supraconducteur notamment pour limiteur de courant et limiteur comportant un tel bobinage**
Supraleitende Wicklung, insbesondere für Strombegrenzer und Strombegrenzer mit einer solchen Wicklung
Superconducting winding, in particular for current limiter and current limiter with such a winding

(30) Priorité: 05.11.1992 FR 9213317; 27.08.1993 FR 9310300
(43) Date de publication de la demande: 11.05.1994
(73) Titulaire: GEC ALSTHOM T ET D SA, 75016 Paris (FR); GEC ALSTHOM ELECTROMECANIQUE SA, 75016 Paris (FR)
(72) Inventeur: Estop, Pascal, F-94400 Vitry sur Seine (FR); Verhaege, Thierry, F-91160 Saulx les Chartreux (FR); Pham, Van Doan, F-69330 Meyzieu (FR); Lacaze, Alain, F-90850 Essert (FR); Cottevieille, Christian, F-93100 Montreuil (FR)
(74) Mandataire: Fournier, Michel

(56) Documents cités:
- EP-A- 0 336 337
- EP-A- 0 377 294
- US-A- 4 760 365
- PATENT ABSTRACTS OF JAPAN vol. 13, no. 53 (E-713)7 Février 1989 & JP-A-63 245 822 (SUMIMOTO ELECTRIC) 12 Octobre 1988
- JOURNAL OF MATERIALS SCIENCE no. 26 , Janvier 1991 , LONDON GB pages 145 - 154 SHROUT ET AL 'Composite PCTR thermistors utilizing conducting borides,silicides, and carbide powders'

## Description

La présente invention concerne un bobinage utilisable notamment pour la réalisation d'un limiteur de courant.

Il est connu, notamment par la demande de brevet européen n° 0 336 337, de réaliser un limiteur supraconducteur au moyen d'une bobine placée dans un cryostat et comprenant deux enroulements coaxiaux en matériau supraconducteur bobinés en sens inverse.

Il a été suggéré, pour augmenter la puissance du limiteur, de réaliser un bobinage en disposant de manière coaxiale plusieurs bobines du type précité et en les reliant électriquement en série.

Dans un tel bobinage, il se pose, pour chacune des bobines constitutives, le problème posé par l'isolation à établir entre chacun des enroulements.

Si l'on isole les enroulements l'un par rapport à l'autre, il est nécessaire d'utiliser une couche isolante supportant une très grande tension. En effet, supposons que l'un des enroulements présente une zone dans laquelle l'état supraconducteur disparaît pour faire place à l'état normal (on désignera dans la suite cette zone par zone de transition): il se développe entre la zone de transition et la zone adjacente de l'autre enroulement une tension électrique importante. Si l'isolement est insuffisant, la tension peut provoquer un claquage entre enroulements. Mais un bon isolement suppose une couche épaisse qui va augmenter le volume du bobinage de manière importante. Par ailleurs cette couche isolante de l'électricité est également isolante de la chaleur, de sorte que la chaleur qui se développe dans la zone de l'enroulement en transition ne se transmettera pas facilement à la zone adjacente de l'autre enroulement dont la transition pourra être retardée.

Un but de la présente invention est de réaliser une isolation partielle entre deux enroulements qui évite les claquages de l'isolant et ne soit pas d'un encombrement important.

Selon l'invention, les enroulements d'une bobine sont séparés par un matériau présentant une résistance surfacique dans le sens radial comprise entre 10⁻⁵ et 10⁻² Ω.m² à la température du cryostat.

En variante, les enroulements étant réalisés au moyen de conducteurs supraconducteurs comprenant chacun une pluralité de brins, chaque brin est revêtu d'une couche de matériau présentant une résistivité dans le sens radial comprise entre 0,1 et 10 Ω.m.

Avantageusement, l'isolation est constituée par une matrice polymérique chargée au noir de carbone.

En variante, l'isolation est constitué par des fibres de carbone imprégnées par une résine polymérique.

L'invention sera bien comprise à la lumière de la description d'un exemple de réalisation de l'invention, en référence au dessin annexé dans lequel:
- la figure 1 est un schéma expliquant les problèmes posés par l'isolation entre les enroulements d'une bobine supraconductrice à deux enroulements,
- la figure 2 est une vue schématique en élevation partiellement en coupe d'un bobinage selon l'invention placé dans un cryostat,
- la figure 3 est une vue partielle en coupe selon la ligne III-III de la figure 2,
- la figure 4 est une vue agrandie d'une partie de la figure 2,
- la figure 5 est un schéma montrant comment sont enroulés les enroulements de deux bobines adjacentes,
- la figure 6 est une vue schématique d'une bobine comprenant deux nappes de conducteurs supraconducteurs dont les brins constitutifs sont revêtus, conformément à l'invention, d'un matériau présentant une résistivité dans le sens radial comprise entre 0,1 et 10 Ω.m.

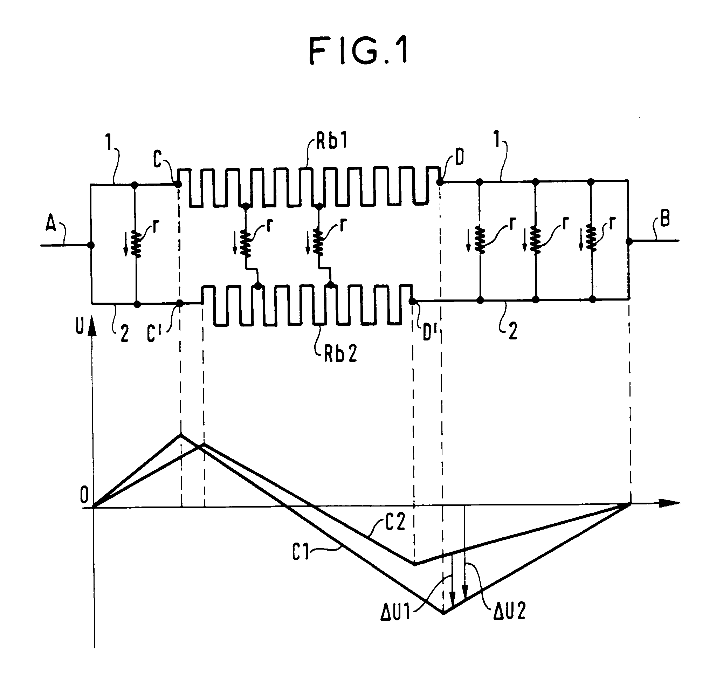

Dans la figure 1, les lignes 1 et 2 représentent respectivement les deux enroulements d'une même bobine, connectés en parallèle aux points A et B.

On suppose que l'enroulement 1 subit, dans la portion CD, une transition de l'état supraconducteur à l'état normal; ceci est illustré dans la figure par la résistance Rbl entre les points C et D. La tension dans la zone CD est illustrée par la courbe C1 de la figure.

Si l'enroulement 2 reste à l'état supraconducteur, la différence de tension ΔU2 entre l'enroulement 1 et l'enroulement 2 atteint des valeurs élevées pouvant entraîner le claquage de l'isolement entre les enroulements.

Si, selon l'invention, la couche entre les enroulements 1 et 2 n'est pas un parfait isolant, ce qui est symbolisé dans la figure 1 par les résistances réparties r, une transition d'une portion CD de l'enroulement 1 entraîne une transition quasi simultanée d'une portion C'D' sensiblement adjacente de l'enroulement 2, par échauffement du courant transféré de l'enroulement 1 vers l'enroulement 2, ce qui a été représenté par la résistance Rb2 dans la figure, entre les points C' et D'. Cet échauffement agit à la fois sur les deux enroulements, de sorte que les zones transitées CD et C'D' se développent alors rapidement pour atteindre AB.

La tension de l'enroulement 2 dans la zone en cours de transition C'D' est représentée par la courbe C2 dans la figure 1. On voit que la différence de tension ΔU1 entre les deux zones CD et C'D' en cours de transition est nettement inférieure à la valeur ΔU2, ce qui évite tout risque de claquage de l'isolant entre les enroulements 1 et 2.

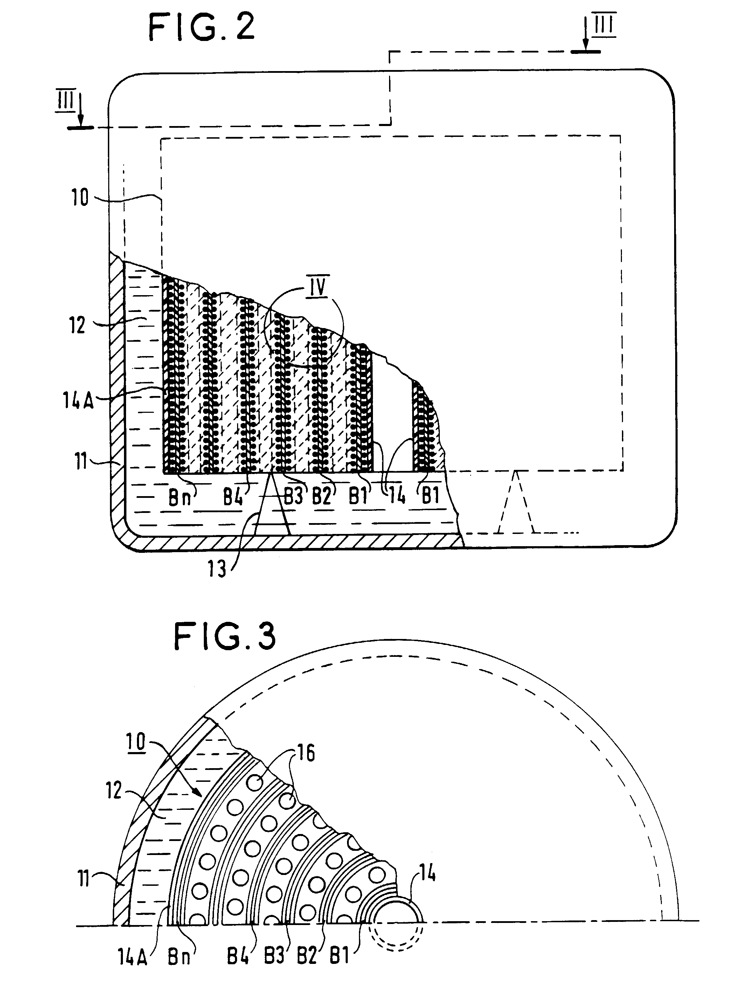

La figure 2 est une vue en élévation partiellement en coupe axiale d'un bobinage 10 selon l'invention placé dans un cryostat 11 partiellement rempli par un liquide cryogénique 12 tel que l'hélium liquide. Le bobinage est posé sur des supports isolants 13. Les traversées du cryostat, qui ne font pas partie de l'invention, n'ont pas été représentées.

Comme on l'a expliqué déjà, et comme il est illustré dans la figure 3, le bobinage supraconducteur 10 de l'invention comprend une pluralité de bobines cylindriques coaxiales B1, B2, ... Bn, reliées électriquement en série. La bobine B1 ayant le diamètre le plus faible est bobinée sur un mandrin 14 ; les autres bobines sont réalisées par bobinages autour de tiges cylindriques entre lesquelles est injectée une résine polymérisable 15 ; la dernière bobine Bn est éventuellement entourée d'un mandrin ou frettage 14A en matériau isolant; les tiges sont alors extraites et leur emplacement définit des canaux 16 pour la circulation du liquide cryogénique.

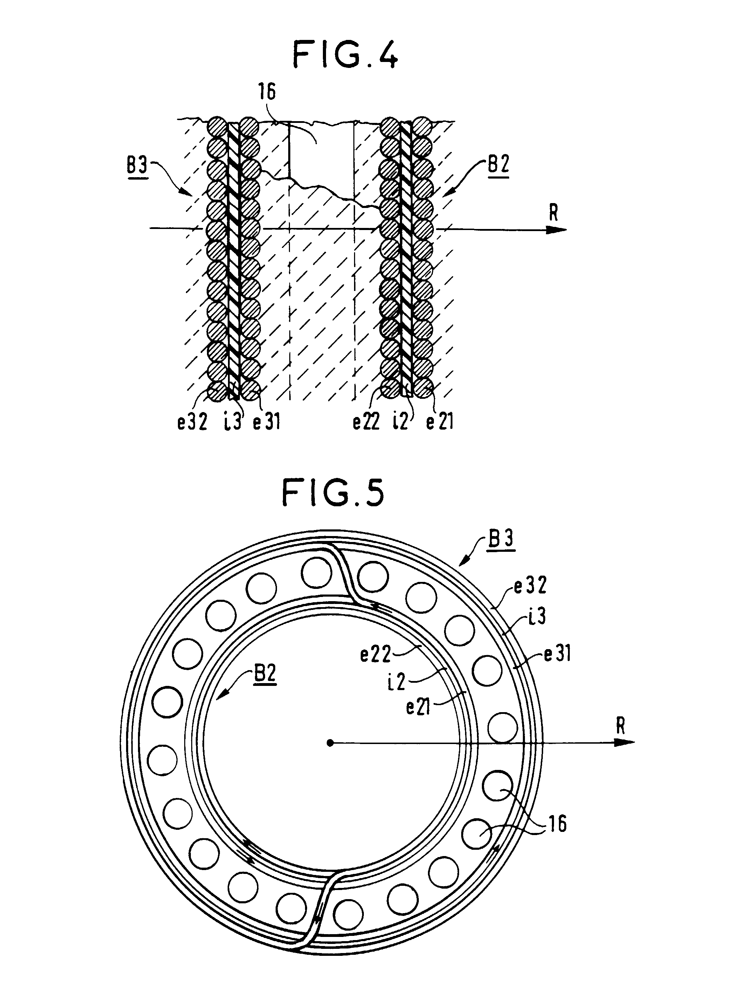

La figure 4 montre une portion agrandie IV de la figure 2.

Dans la figure 4, on distingue une partie de la bobine B2 et une partie de la bobine B3. La bobine B2 comporte deux enroulements e21 et e22 bobinés à spires jointives et en sens inverse, afin de réduire l'auto-inductance; les enroulements sont constitués par exemple:
- d'un conducteur à 7 brins dont six brins de niobium-titane compactés autour d'un brin résistif constituant une âme centrale,
- ou d'une nappe comprenant plusieurs (8 par exemple) conducteurs à 7 brins,
- ou d'une barre type Roebel constituée d'un assemblage transposé de conducteurs à 7 brins.

Ces exemples ne sont nullement limitatifs.

Les enroulements e21 et e22 sont séparés par une couche i2 réalisée en un matériau qui, selon la caractéristique essentielle de l'invention, n'est pas un isolant parfait, mais un matériau présentant une résistance surfacique dans le sens radial comprise entre 10⁻⁵ et 10⁻² Ω.m² à la température qui règne dans le cryostat. Un tel matériau peut être par exemple une matrice polymérique chargée de noir de carbone ou tout autre matériau ayant la même fourchette de résistivité dans les conditions d'utilisation précitées.

La bobine B3 est constituée de manière identique de deux enroulements e31 et e32 séparés par une couche isolant i3.

A titre d'exemple, pour la réalisation d'un limiteur de courant à la tension nominale de 63 kVeff et à l'intensité nominale efficace de 1250 ampères, le bobinage comprendra de l'ordre de 25 bobines; les conducteurs auront une épaisseur de 0,5 mm environ et l'épaisseur de l'isolation partielle entre enroulements d'une bobine sera voisin de 0,3 mm. Cette isolation partielle sera par exemple une matrice polymérique chargée de noir de carbone ayant une résistivité de 1 Ω.m à la température de l'hélium liquide, ce qui donne, pour une épaisseur de 0,3 mm, une résistance surfacique dans le sens radial de 3.10⁻⁴ Ω.m². On peut obtenir un résultat analogue en utilisant de la fibre de carbone sous forme de tissu, imprégnée après bobinage par une résine polymérique. En pratique, la résistance surfacique dans le sens radial peut être choisie entre 10⁻⁵ et 10⁻² Ω.m².

La figure 5 montre comment sont enroulés les conducteurs de deux bobines adjacentes, soit les bobines B2 et B3 portant respectivement les enroulements e21, e22 et e31, e32. La jonction est faite à l'un des sommets du bobinage. Le flux de fuite d'un tel bobinage est extrêmement réduit, de sorte que les pertes par courants induits dans le cryostat sont négligeables.

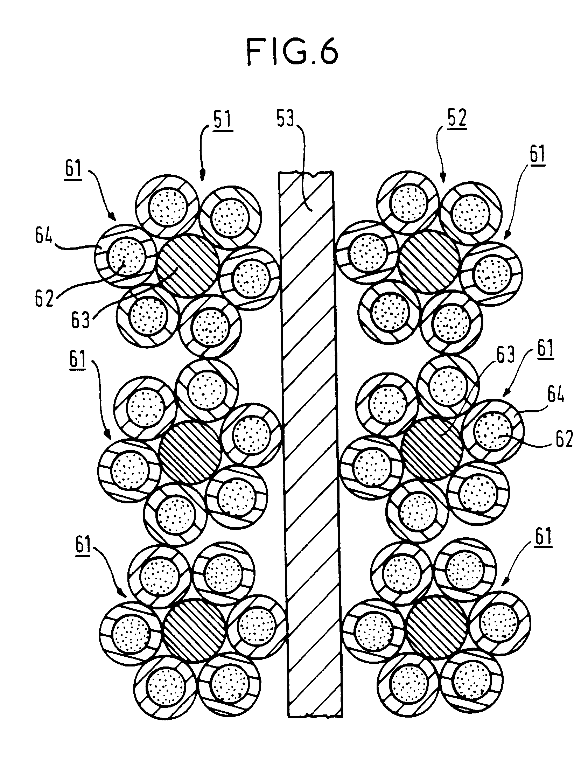

La figure 6 illustre une variante de réalisation de l'invention.

Le bobinage, représenté partiellement dans la figure 6, comprend deux nappes 51 et 52, bobinées à spires jointives et en sens inverses, et optionnellement séparées par une couche mince 53. Les conducteurs supraconducteurs 61 utilisés dans l'exemple de la figure 6 sont des conducteurs du type dit 6+1, comprenant six brins supraconducteurs référencés 62 et assemblés autour d'un brin résistif 63 constituant une âme centrale.

Selon l'invention, chacun des brins 62 est, préalablement à la réalisation du conducteur, isolée par une gaine 64 réalisée en un matériau ayant une résistivité dans le sens radial comprise entre 0,1 et 10 Ω.m, qui est avantageusement un polymère chargé de noir de carbone.

Dans un exemple de réalisation où le conducteur 62 a un diamètre de 0,5 mm, l'épaisseur de la gaine est comprise entre 0,1 et 0,2 mm, de sorte que le conducteur gainé a un diamètre compris alors entre 0,7 et 0,9 mm.

La couche optionnelle 53 séparant les nappes est avantageusement réalisée dans le même matériau.

La disposition en deux nappes 51 et 52, très proches l'une de l'autre et de sens de rotation opposés, confère au bobinage une auto-inductance ayant une valeur très voisine de zéro, de sorte qu'à l'état supraconducteur, il n'existe pratiquement pas de tension entre spires ou entre nappes. L'isolation partielle procurée par la gaine 64 des conducteurs et par la couche 53 suffit pour éviter les courants de circulation entre les brins supraconducteurs d'un conducteur, entre l'âme et les brins supraconducteurs, et entre les deux nappes.

Lorsqu'une transition se développe, les transferts de courants entre brins, entre spires et entre nappes produisent un effet Joule qui accélère la propagation de ladite transition; le caractère partiellement conducteur de la gaine 14 évite l'apparition de tensions excessives entre brins ou entre nappes, qui pourraient conduire, si l'isolation était classique, à des claquages. L'existence d'éventuels défauts locaux d'isolation aurait peu de conséquences, contrairement au cas de l'isolation classique.

Lorsque le bobinage est en phase de limitation de courant, l'isolation entre brins et entre nappes n'est pas nécessaire. La résistance entre spires produite par les gaines 64 est suffisante pour ne pas compromettre l'effet limiteur.

Le gainage par polymère chargé de noir de carbone présente l'avantage supplémentaire d'améliorer la cohésion mécanique du conducteur.

Bien que l'exemple décrit porte sur l'emploi d'un conducteur du type 6+1, il est bien clair que l'invention n'est pas limitée à cet emploi, et qu'elle s'applique à tous types de conducteurs, tels que conducteurs N+1 ou barres de Roebel.

L'invention s'applique notamment à la réalisation de limiteurs de courant à moyenne et haute tension.

## Revendications

1. Bobinage supraconducteur utilisable notamment pour un limiteur de courant, comportant une pluralité de bobines cylindriques disposées coaxialement, reliées électriquement en série et comportant chacune deux enroulements en matériau supraconducteur, reliés électriquement en parallèle, disposés coaxialement l'un par rapport à l'autre et bobinés en sens inverse, caractérisé en ce que dans chacune des bobines, les enroulements sont séparés par un matériau présentant une résistance surfacique dans le sens radial comprise entre 10⁻⁵ et 10⁻² Ω .m² à la température du cryostat.

2. Bobinage supraconducteur utilisable notamment pour un limiteur de courant, comportant au moins une bobine comprenant deux nappes de conducteurs supraconducteurs enroulés à spires jointives et en sens inverse, lesdits conducteurs supraconducteurs comprenant chacun une pluralité de brins, caractérisé en ce que chaque brin (62) est revêtu d'une couche (64) de matériau présentant une résistivité dans le sens radial comprise entre 0,1 et 10 Ω.m.

3. Bobinage selon la revendication 2, caractérisé en ce que la couche de matériau a une épaisseur comprise entre 0,1 et 0,2 mm.

4. Bobinage selon l'une des revendications 1 à 3, caractérisé en ce que le matériau est une matrice polymérique chargée au noir de carbone.

5. Bobinage selon l'une des revendications 1 à 3, caractérisé en ce que le matériau est constitué de fibres de carbone imprégnées d'une résine polymérique.

6. Bobinage selon l'une des revendications précédentes, caractérisé en ce que les deux nappes sont séparées par une couche (3, 53) réalisée en un matériau présentant une résistivité transverse comprise entre 0,1 et 10 Ω.m.

7. Limiteur de courant caractérisé en ce qu'il comprend un bobinage selon l'une des revendications 1 à 6.

## Patentansprüche

1. Supraleitende Wicklung, die insbesondere für eine Strombegrenzer verwendbar ist und mehrere zylindrische Spulen in koaxialer Anordnung enthält, die elektrisch in Reihe geschaltet sind und je zwei elektrisch parallel geschaltete Teilspulen aus supraleitendem Material besitzen, die zueinander koaxial angeordnet und in Gegensinn gewickelt sind, dadurch gekennzeichnet, daß in jeder Spule die Teilspulen durch ein Material mit einem flächenbezogenen Widerstand in radialer Richtung zwischen 10⁻⁵ und 10⁻² Ωm² bei der Temperatur des Kryostaten voneinander getrennt sind.

2. Supraleitende Wicklung, insbesondere für einen Strombegrenzer, mit mindestens einer Spule, die zwei supraleitende Wicklungslagen enthält, die mit aneinanderliegenden Windungen und im Gegensinn gewickelt sind, wobei die Supraleiter je mehrere Andern besitzen, dadurch gekennzeichnet, daß jede Ader (62) mit einer Schicht (64) aus einem Materials mit einem spezifischen Widerstand in radialer Richtung zwischen 0,1 und 10 Ωm bedeckt ist.

3. Wicklung nach Anspruch 2, dadurch gekennzeichnet, daß die Schicht (64) eine Dicke zwischen 0,1 und 0,2 mm besitzt.

4. Wicklung nach einem der Ansprüche 1 bis 3, dadurch gekennzeichnet, daß das Material eine Polymermatrix ist, die Kohlenstoffruß enthält.

5. Wicklung nach einem der Ansprüche 1 bis 3, dadurch gekennzeichnet, daß das Material aus Kohlenstofffasern besteht, die mit einem Polymerharz imprägniert sind.

6. Wicklung nach einem der vorhergehenden Ansprüche, dadurch gekennzeichnet, daß die beiden Wicklungslagen durch eine Schicht (3, 53) aus einem Material voneinander getrennt sind, das einen spezifischen Querwiderstand zwischen 0,1 und 10 Ωm besitzt.

7. Strombegrenzer, dadurch gekennzeichnet, daß er eine Wicklung nach einem der Ansprüche 1 bis 6 enthält.

## Claims

1. A superconductive coil assembly which may be used particularly for a current limiter, the coil assembly comprising a plurality of coaxial cylindrical coils electrically connected in series, each coil comprising two windings of superconductive material electrically connected in parallel, arranged coaxially and wound in opposite directions, the coil assembly being characterized in that in each coil, the windings are separated by a material which has a surface resistance in the radial direction lying in the range 10⁻⁵ Ω.m² to 10⁻² Ω.m² at the temperature of the cryostat.

2. A superconductive coil assembly which may be used particularly for a current limiter, the coil assembly comprising at least one coil comprising two sheets of superconductive wires wound as touching turns and in opposite directions, each of said superconductive windings comprising a plurality of strands, the coil assembly being characterized in that each strand (62) is covered with a layer (64) of material which has a resistivity in the radial direction lying in the range 0.1 Ω.m to 10 Ω.m.

3. A coil assembly according to claim 2, characterized in that the layer of material has a thickness lying in the range 0.1 mm to 0.2 mm.

4. A coil assembly according to any one of claims 1 to 3, characterized in that the material is a polymer matrix filled with carbon black.

5. A coil assembly according to any one of claims 1 to 3, characterized in that the material is constituted by carbon fibers impregnated with a polymer resin.

6. A coil assembly according to any one of the preceding claims, characterized in that the two sheets are separated by a layer (i3, 53) of a material which has a transverse resistivity lying in the range 0.1 Ω.m to 10 Ω.m.

7. A current limiter characterized in that it comprises a coil assembly according to any one of claims 1 to 6.
